# EUROPÄISCHE PATENTSCHRIFT

(11) **EP 0 654 967 B1**
(45) Veröffentlichungstag und Bekanntmachung des Hinweises auf die Patenterteilung: **12.02.1997**
(21) Anmeldenummer: 93917671.5
(22) Anmeldetag: 27.07.1993
(51) Int. Cl.: A01N 37/02

(54) **VERWENDUNG VON KOKOSVORLAUFFETTSÄURE ZUR INSEKTENABWEHR**
USE OF COCONUT PRECURSOR FATTY ACID AS INSECT-REPELLENT
UTILISATION D'ACIDE GRAS PRECURSEUR DE NOIX DE COCO COMME PRODUIT ANTI-INSECTES

(30) Priorität: 11.08.1992 DE 4226581
(43) Veröffentlichungstag der Anmeldung: 31.05.1995
(73) Patentinhaber: PERYCUT-CHEMIE A.G., 8053 Zürich (CH)
(72) Erfinder: BENCSITS, Franz, CH-8053 Zürich (CH)
(74) Vertreter: Goldbach, Klara
(86) Internationale Anmeldenummer: EP9302003
(87) Internationale Veröffentlichungsnummer: WO9404029

(56) Entgegenhaltungen:
- DE-A- 4 012 224
- US-A- 1 589 866
- US-A- 2 396 012
- US-A- 3 668 226
- US-A- 4 518 593
- EXPERIENTIA Bd. 26, Nr. 7 , 15. Juli 1970 , BASEL CH Seiten 728 - 730 W.A.SKINNER ET AL. 'Human Skin-Surface Lipid Fatty Acids - Mosquito Repellents'
- DATABASE CHEMABS CHEMICAL ABSTRACTS SERVICE, COLUMBUS, OHIO, US AN: CA94(17)134074b G.A.VALE 'Field studies of the responses of tsetse flies (Glossinidae) and other Diptera to carbon dioxide, acetone and other chemicals' & BULL. ENTOMOL. RES. Bd. 70, Nr. 4 , 1980 Seiten 563 - 570
- JOURNAL OF ECONOMIC ENTOMOLOGY Bd. 63, Nr. 6 , Dezember 1970 , COLLEGE PARK, MARYLAND US Seiten 1752 - 1755 O.F.BODENSTEIN ET AL. 'Laboratory Evaluations of Materials as Repellents for the Face Fly, 1962-69'
- DATABASE CHEMABS CHEMICAL ABSTRACTS SERVICE, COLUMBUS, OHIO, US AN: CA97(15):122022q Y.S.HWANG ET AL. 'Fatty acids as oviposition repellents for mosquitoes' & PROC. PAP. ANNU. CONF. CALIF. MOSQ. VECTOR CONTROL ASSOC.,49TH., 1982 Seiten 106 - 107
- EXPERIENTIA Bd. 26, Nr. 7, 15. Juli 1970, Basel, CH, Seiten 728-730, W.A. SKINNER et al.
- DATABASE CHEMABS, CHEMICAL ABSTRACTS SERVICE, Columbus, Ohio, US, Zusammenf. AN:CA94(17)134074b, G.A. VALE
- JOURNAL OF ECONOMIC ENTOMOLOGY Bd. 63, Nr. 6, Dezember 1970, College Park, Maryland, US, Seiten 1752-1755, O.F. BODENSTEIN et al.
- DATABASE CHEMABS, CHEMICAL ABSTRACTS SERVICE, Columbus, Ohio, US, Zsammenf. AN:CA97(15):122022q, Y.S. HWANG et al.

## Beschreibung

Die vorliegende Erfindung betrifft die Verwendung von Kokosvorlauffettsäure zur Abwehr fliegender, stechender und saugender Insekten.

Repellentien sind chemische Substanzen, die auf Insekten abstoßend wirken. Große praktische Bedeutung hat ihre Anwendung in der Human- und Veterinärhygiene, wo sie Mensch und Tier vor Befall mit blutsaugenden, beißenden oder sonst lästigen Insekten schützen. Bei unmittelbar auf die Haut aufzutragenden Repellentien ist es erforderlich, daß sie hautverträglich, ungiftig, schweiß- und lichtecht und in kosmetischer Hinsicht einwandfrei sind. Außerdem soll der Schutz der behandelten Hautpartien möglichst lange Zeit anhalten und die Wirkungsbreite der Repellentien möglichst groß sein, d.h. sie sollten gegen möglichst viele schädliche oder lästige Insekten wirken.

In der Vergangenheit wurden ätherische Öle, wie Citronellöl, Campher und Eukalyptusöl, als Repellentien eingesetzt; wegen ihrer Nachteile wurden sie jedoch überwiegend durch synthetische Repellentien ersetzt. Synthetische, im Stand der Technik angewandte Repellentien sind z.B. Phthalsäuredimethylester, 1,2-Ethyl-hexan-1,3-diol, 3,4-Dihydro-2,2-dimethyl-4-oxo-2H-pyran-6-carbonsäure-n-butylester, Bernsteinsäuredipropylester, N,N-Diethyl-3-methyl-benzoesäureamid und Pyridin-2,5-dicarbonsäure-di-n-propylester (Ullmanns Encyklopädie der technischen Chemie, 4. Auflage, Bd. 13, S. 237 ff., 1977). Häufig sind solche synthetischen Repellentien jedoch nicht schweißbeständig und reizen die Schleimhäute. Es ist bei jedem synthetischen Repellent zunächst die Hautverträglichkeit und in jüngster Zeit auch die biologische Abbaubarkeit zu prüfen.

Demgemäß liegt der vorliegenden Erfindung die Aufgabe zugrunde, einen insektenabwehrenden Wirkstoff für den Auftrag auf die Haut auf Basis natürlicher und naturidentischer Rohstoffe mit geringstem toxikologischen Risiko zur Verfügung zu stellen, der außerdem über einen langen Zeitraum eine hohe Wirksamkeit entfaltet.

Diese Aufgabe wird erfindungsgemäß durch die Verwendung von natürlicher oder synthetischer Kokosvorlauffettsäure als insektenabwehrender Wirkstoff gelöst.

Wenn die erfindungsgemäß verwendete Kokosvorlauffettsäure in einem Insektenabwehrmittel vorliegt, so kann ihr als weiterer Wirkstoff auch ein Öl oder Fett aus der Gruppe Rapsöl, Sonnenblumenöl, Erdnußöl/-butter, Sojaöl, Distelöl, Cupheaöl, Kokosöl, Palmkernöl, Palmöl, Rindertalg, Schweineschmalz, Hammelfett und Fischtran beigemischt sein.

Als weiterer Wirkstoff kann auch ein natürlicher, naturidentischer oder synthetischer Fettalkohol beigemischt sein, der vorzugsweise 5 bis 18 Kohlenstoffatome aufweist, gesättigt ist oder 1 bis 3 ungesättigte Bindungen pro Molekül aufweist. Die natürlichen Fettalkohole werden beispielsweise aus pflanzlichen und/oder tierischen Ölen und/oder den daraus erhältlichen Fettsäuren und/oder Fettsäurealkylestern erhalten. Die naturidentischen und/oder synthetischen Fettalkohole sind beispielsweise aus Paraffin und/oder Ethen erhältlich.

Ein Insektenabwehrmittel, enthaltend die erfindungsgemäß verwendete Kokosvorlauffettsäure allein, aber auch in Kombination mit den genannten weiteren Wirkstoffen, kann als wäßrige Emulsion vorliegen, wobei als Emulgatoren Alkylsulfate, Alkylsulfonate, Alkylarylsulfonate und Alkoxylate natürlicher oder synthetischer Herkunft eingesetzt werden können.

Ein Insektenabwehrmittel, das 5 bis 99 Gew.-% der Kokosvorlauffettsäure und 1 bis 95 Gew.-% mindestens eines fetten Öls enthält, ist besonders wirksam. Ein weiteres Insektenabwehrmittel enthält 5 bis 99 Gew.-% Kokosvorlauffettsäure und 1 bis 95 Gew.-% mindestens eines Fettalkohols.

Ferner umfaßt ein wirksames Insektenabwehrmittel 10 bis 98 Gew.-% Kokosvorlauffettsäure, 1 bis 89 Gew.-% mindestens eines fetten Öls und 1 bis 89 Gew.-% mindestens eines Fettalkohols.

Weitere Insektenabwehrmittel, enthaltend die erfindungsgemäß verwendete Kokosvorlauffettsäure, umfassend 10 bis 90 Gew.-% Kokosvorlauffettsäure, 8 bis 88 Gew.-% mindestens eines Emulgators und 2 bis 82 Gew.-% Wasser, oder 8 bis 89 Gew.-% Kokosvorlauffettsäure, 1 bis 79 Gew.-% mindestens eines fetten Öls, 8 bis 88 Gew.-% mindestens eines Emulgators und 2 bis 82 Gew.-% Wasser, oder 8 bis 88 Gew.-% Kokosvorlauffettsäure, 1 bis 79 Gew.-% mindestens eines fetten Öls, 8 bis 88 % mindestens eines Emulgators, 1 bis 78 Gew.-% mindestens eines Fettalkohols und 2 bis 82 Gew.-% Wasser.

Es sind auch Insektenabwehrmittel denkbar, die 10 bis 90 Gew.-% Kokosvorlauffettsäure und 10 bis 90 Gew.-% mindestens eines niederen Alkohols mit 1 bis 4 Kohlenstoffatomen, z.B. Ethyl-, Methyl-, Propyl-, Isopropyloder Butylalkohol, oder 10 bis 90 Gew.-% Kokosvorlauffettsäure, 10 bis 89 Gew.-% mindestens eines niederen Alkohols und 1 bis 80 Gew.-% Wasser oder 9 bis 89 Gew.-% Kokosvorlauffettsäure, 2 bis 82 Gew.-% mindestens eines niederen Alkohols, 8 bis 79 Gew.-% mindestens eines Emulgators und 1 bis 80 Gew.-% Wasser.

Vorzugsweise können die wäßrigen Formulierungen solcher Insektenabwehrmittels 0,001 bis 15 Gew.-% einer Base, beispielsweise Natronlauge, Kalilauge und/oder Triethanolamin, enthalten.

Die erfindungsgemäß verwendete natürliche oder synthetische Kokosvorlauffettsäure kann durch einfache chemische Umsetzung aus natürlichen oder naturidentischen, toxikologisch unbedenklichen Rohstoffen, beispielsweise durch Hydrolyse, Umesterung, Hydrierung, Hochdruckhydrierung, Härtung und/oder Dehydratisierung, wie im Stand der Technik bekannt, erhalten werden. Eventuell in Kombination damit verwendete fette Öle können ebenfalls durch herkömmliche Verfahren aus ölliefernden Rohstoffen, wie Pflanzensamen und tierischen Fetten, gewonnen werden. Demgemäß enthält ein Insektenabwehrmittel, hergestellt aus diesen Substanzen, völlig unbedenkliche synthetische (naturidentische) oder natürliche Grundstoffe, und weist folglich bei hervorragender Repellentwirkung das geringste toxikologische und irritative Risiko auf. Die Kokosvorlauffettsäure, bzw. ein sie enthaltendes Insektenabwehrmittel, wird vorzugsweise durch Aufbringen auf die Haut oder die Bekleidung zur Abwehr von fliegenden, stechenden und saugenden Insekten bei Menschen und Tieren eingesetzt.

Die nachstehenden Beispiele erläutern die Erfindung.

### 1. Beispiele für die Verwendung von Kokosvorlauffettsäure in Insektenabwehrmitteln

(I)
   - 30 Gew.-%: Kokosvorlauffettsäure (C6 - C12)
   - 15 Gew.-%: Fettalkoholethoxylat mit 9 mol EO
   - 55 Gew.-%: Wasser
(II)
   - 30 Gew.-%: Kokosvorlauffettsäure (C6 - C12)
   - 15 Gew.-%: Fettalkoholethoxylat mit 9 mol EO
   - 10 Gew.-%: Isopropanol
   - 45 Gew.-%: Wasser
(III)
   - 30 Gew.-%: Kokosvorlauffettsäure (C6 - C12)
   - 15 Gew.-%: Fettalkoholethoxylat mit 9 mol EO
   - 10 Gew.-%: Isopropanol
   - 2 Gew.-%: Kaliumhydroxid
   - 43 Gew.-%: Wasser

### 2. Anwendungsbeispiele

Die Insektenabwehrmittel (II) und (III) wurden an verschiedenen Personen getestet:

### Versuch:

Der Unterarm einer Versuchsperson wurde auf einer Fläche von ca. 250 cm² mit der entsprechenden Menge Testsubstanz (II) bzw.(III) behandelt. Die Menge von 2 ml der entsprechenden Testsubstanz wurde gleichmäßig verteilt. Die behandelte Unterarmfläche wurde an beiden Enden mit einem mückendichten Klebeband und einem kurzen Plastikschlauch abgedichtet. Die unbehandelte Hand wurde mit einem dicken Handschuh überzogen und diente so gleichzeitig als Kontrolle für die Stechaktivität der Versuchstiere.

Als Versuchstiere wurden etwa 300 bis 400 Gelbfiebermücken (Aedes aegypti), fast ausschließlich Weibchen, in einem Zuchtkäfig von 40 x 40 x 40 cm eingesetzt.

Für den Test wurden der Unterarm und die Hand stündlich in den Mückenkäfig gehalten und während 10 Minuten die Zahl der Stechmücken notiert, die
(a) durch den Handschuh zu stechen versuchten (positive Kontrolle)
(b) die behandelte Fläche näher als 3 cm anflogen (zu Beginn, Testmitte, am Ende ermittelt)
(c) auf der behandelten Fläche länger als 2 Sekunden sitzenblieben und
(d) in die behandelte Fläche einstachen und Blut saugten.

Bei den Parametern (a) und (b) handelt es sich um Schätzwerte, da eine exakte Bestimmung nicht möglich ist.

| **Testsubstanz (III)** (Testperson (1)) | | |
|---|---|---|
| Zeitpunkt (h) | Absitzende (c) | Stechende (d) |
| 1 | 8 | 0 |
| 2,25 | 1 | 0 |
| 3,5 | 0 | 0 |
| 4,75 | 9 | 0 |
| 6 | 0 | 0 |
| 7 | 7 | 0 |
| 8 | 3 | 0 |
| a) Durchschnitt pro Testphase auf dem Handschuh: 100 b) Anfliegende: 10 - 9 - 5 | | |

| **Testsubstanz (II)** (Testperson (2)) | | |
|---|---|---|
| Zeitpunkt (h) | Absitzende (c) | Stechende (d) |
| 1 | 0 | 0 |
| 2 | 0 | 0 |
| 3 | 0 | 0 |
| 4 | 0 | (2)* |
| 5 | 0 | 0 |
| 6 | 0 | 0 |
| 7 | 1 | 0 |
| 8 | 0 | 0 |
| a) Durchschnitt pro Testphase auf dem Handschuh: 100 b) Anfliegende: 1-1-1 | | |

| | | |
|---|---|---|
| )*: Diese 2 Stiche erfolgten im Randbereich der Testfläche, einem wahrscheinlich durch die Schutzmanschette vom Mittel gereinigten Gebiet. | | |

| **Testsubstanz (III)** (Testperson (2)) | | |
|---|---|---|
| Zeitpunkt (h) | Absitzende (c) | Stechende (d) |
| 1 | 0 | 0 |
| 2 | 1 | 0 |
| 3 | 0 | 0 |
| 4 | 0 | 0 |
| 5 | 0 | 0 |
| 6 | 0 | 0 |
| 7 | 1 | 0 |
| 8 | 0 | 0 |
| a) Durchschnitt pro Testphase auf dem Handschuh: 100 b) Anfliegende: 2-2-2 | | |

Die Wirksamkeit der Testsubstanzen (II) und (III) ist bezüglich allen Parametern hervorragend. Beide Substanzen haben über die gesamte Testdauer eine gute Fernhaltewirkung. (Anfliegende Mücken zu Testbeginn, in der Mitte und am Ende des Tests; siehe Angabe b)). Die Schutzwirkung gegen Mückenstiche ist ausgezeichnet, da keine der Testpersonen im Verlauf der vollen Testperiode von 8 h gestochen wurde.

Die Wirksamkeit einer Substanz ergibt sich vor allem aus dem Verhältnis der auf dem Handschuh absitzenden stechlustigen Mücken zu den übrigen Werten. Die Zahl der einstechenden Mücken ist für die Dauer der Wirkung und damit in den Tropen indirekt auch für die Infektionsgefahr der entscheidende Faktor. Die getesteten Substanzen gewährleisten Schutz von mindestens 8 Stunden. Wie aus den Parametern b) und c) ersichtlich ist, gibt es auch bei Anwendung der Kokosvorlauffettsäure eine gewisse Zahl anfliegender und absitzender Mücken; diese stechen jedoch nicht. Allen getesteten Substanzen kann demnach eine starke Repellentwirkung zugeschrieben werden.

## Patentansprüche

1. Verwendung einer Zusammensetzung, enthaltend natürliche oder synthetische Kokosvorlauffettsäure und ein Öl oder Fett aus der Gruppe Rapsöl, Sonnenblumenöl, Erdnußöl/-butter, Sojaöl, Distelöl, Cupheaöl, Kokosöl, Palmkernöl, Palmöl, Rindertalg, Schweineschmalz, Hammelfett und Fischtran als insektenabwehrender Wirkstoff.

2. Verwendung nach Anspruch 1, **dadurch gekennzeichnet**, daß der insektenabwehrende Wirkstoff auf die menschliche oder tierische Haut oder auf die Bekleidung aufgebracht wird.

## Claims

1. The use as an insect repellent of a composition containing natural or synthetic first runnings coconut fatty acid and an oil or fat from the group comprising rape oil, sunflower oil, peanut oil, peanut butter, soy bean oil, thistle oil, Cuphea oil, coconut oil, palm kernel oil, palm oil, beef dripping, lard, mutton fat and fish oil.

2. The use according to claim 1, characterised in that the insect repellent is applied to human or animal skin or to clothing.

## Revendications

1. Utilisation d'une composition, contenant une première fraction de distillation d'acide gras de noix de coco, naturel ou synthétique et une huile ou une graisse du groupe se composant de l'huile de colza, l'huile de tournesol, l'huile/beurre de cacahuète, l'huile de soja, l'huile de chardon, l'huile de cuphaea, l'huile de coco, l'huile de palmiste, l'huile de palme, le suif de boeuf, le saindoux, la graisse de mouton, et l'huile de poisson, en tant que substance active repoussant les insectes.

2. Utilisation selon revendication 1, caractérisée en ce que la substance active repoussant les insectes est appliquée sur la peau humaine ou animale ou sur les vêtements.
